# EUROPEAN PATENT APPLICATION

(11) **EP 4 525 341 A1**
(43) Date of publication of application: **19.03.2025**
(21) Application number: 23819017.7
(22) Date of filing: 02.06.2023
(51) Int. Cl.: H04L 5/00

(54) **METHOD AND APPARATUS FOR WIRELESS COMMUNICATION**

(30) Priority: 07.06.2022 CN 202210637034
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Zhang, Fan
(86) International application number: PCT/CN2023/097914
(87) International publication number: WO 2023/236852

(57) **Abstract**

The present application discloses a method and apparatus for wireless communication. A node first receives a first reference signal, and then sends first channel information and a first CQI set; the measurement for the first reference signal is used for generating the first channel information and the first CQI set; each CQI comprised in the first CQI set indicates a CQI index from a target CQI table, the target CQI table is related to the type of the first channel information, the type of the first channel information is a PMI or a first type, and the first type is based on a non-codebook; when the type of the first channel information is the PMI, the target CQI table is a first CQI table; when the type of the first channel information is the first type, the target CQI table is a second CQI table. The present application improves CSI reporting of a terminal having an AI capability, so as to improve the overall performance of a system.

## Description

### TECHNICAL FIELD

The present application relates to methods and devices in wireless communication systems, and in particular to a scheme and device for Channel Quality Indicator (CQI) in a wireless communication system.

### BACKGROUND

In traditional wireless communications, the UE (i.e., User Equipment) report may include at least one of a variety of auxiliary information, such as CSI (i.e., Channel Status Information), Beam Management-related auxiliary information, localization-related auxiliary information and so on. The CSI includes at least one of CSI-RS Resource Indicator (CRI), Rank Indicator (RI), Precoding Matrix Indicator (PMI), or Channel quality indicator (CQI).

The network device selects appropriate transmission parameters for the UE based on the UE's report, such as the cell being camped, Modulation and Coding Scheme (MCS), Transmitted Precoding Matrix Indicator (TPMI), Transmission Configuration Indication (TCI) and other parameters. In addition, UE reporting can be used to optimize network parameters such as better cell coverage, switching base station based on UE location, etc.

In the New Radio (NR) system, in order to simplify the complexity of the reporting as well as to reduce the system resources occupied by the CSI, the NR system supports the Differential CQI value-based reporting, which is to further report a Sub-band Differential CQI value based on the reporting of the Wideband CQI, so as to realize the reporting of the Sub-band CQI to the base station with fewer bits.

### SUMMARY

With the increase in the number of antennas, the traditional PMI feedback method brings a large amount of redundancy overhead, therefore, CSI compression based on AI (i.e., Artificial Intelligence) or ML (i.e., Machine Learning) was set up for project in NR R (release) 18. In conventional multi-antenna systems, CQI is usually calculated on condition of PMI; for example, based on the assumption that the PMI reported by the UE (i.e., User Equipment) is adopted by the base station. The applicant has found through its research that ML/AI-based CSI calculations are very different from traditional CSI calculations, such that the traditional CQI calculation method, and whether the corresponding tables for the corresponding subband differential CQI values are still applicable, will be challenged.

To address the above problem, the present application provides a solution. It should be noted that while a large number of embodiments of the present application are directed to AI/ML, the present application is also applicable to traditional solutions, e.g., linear channel reconstruction-based solutions; in particular, it is taken into account that specific channel reconstruction algorithms are likely to be non-standardized or implemented by hardware equipment vendors themselves. Further, the use of a unified UE reporting scheme can reduce implementation complexity or improve performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

Refer to 3GPP TS38.211, TS38.212, TS38.213, TS38.214, TS38.215, TS38.321, TS38.331, TS38.305, or TS37.355, if necessary, for a better understanding of the present application.

The present application provides a method in a first node for wireless communications, comprising:
receiving a first reference signal; and
transmitting first channel information and a first CQI set;
herein, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, the above method is characterized in avoiding inaccurate CQI calculations caused by the first channel information of the first type.

In one embodiment, the above method is characterized in providing a more accurate reflection of the channel quality.

In one embodiment, the above method is characterized in having good compatibility.

In one embodiment, the above method is characterized in reflecting the system flexibility by using CQI tables in different forms as a reference for reported CQIs in instances when AI is used and when it is not used, respectively.

According to one aspect of the present application, characterized in comprising:
transmitting a first wideband CQI;
herein, the first wideband CQI is for a first frequency-domain resource, the first frequency-domain resource including multiple sub-bands, the at least one CQI being multiple CQIs, the multiple CQIs being respectively used to indicate differential values between indexes of CQIs of the multiple sub-bands and the first wideband CQI.

In one embodiment, the above method is characterized in continuing to use the existing system's mechanism of differential CQI reporting so as to reduce the occupancy of the system's bandwidth by CSI reporting.

According to one aspect of the present application, characterized in that a number of CQI values included in the second CQI table is greater than a number of CQI values included in the first CQI table.

According to one aspect of the present application, characterized in that a number of CQI values included in the second CQI table is equal to a number of CQI values included in the first CQI table.

In one embodiment, the above method is characterized in introducing the second CQI table applicable to AI-capable terminals, thereby improving the accuracy of the reported CSI.

According to one aspect of the present application, characterized in that the second CQI table includes a first CQI value; for any CQI in the first CQI set, when the any CQI is the first CQI value, the first channel information is unavailable for a sub-band that the any CQI corresponds to.

In one embodiment, the above method is characterized in that the first CQI value is used by the first node to implicitly indicate that the reported sub-band CQI is not available.

According to one aspect of the present application, characterized in that when the type of the first channel information is PMI, CQIs in the first CQI set are calculated conditioned on a precoding matrix indicated by the first channel information; when the type of the first channel information is the first type, a measurement of the first reference signal is used to generate a first channel matrix, the first channel matrix being used to generate the first CQI set, the first channel matrix being available only for the first node.

According to one aspect of the present application, characterized in that when the type of the first channel information is the first type, the first channel matrix is an output obtained after inputting the first channel information to a first reference decoder, the first reference decoder being only available for the first node.

In one embodiment, the above method is characterized in taking into account the effect of errors introduced by the decoder on the first CQI and thus avoiding the first CQI's being too high.

In one embodiment, the above method is characterized in allowing the first node and the second node to process the second channel information using different decoders, which improves the flexibility of implementation by hardware vendors.

According to one aspect of the present application, characterized in that when the type of the first channel information is the first type, the first channel matrix is used together with a first amount of adjustment to calculate CQIs included in the first CQI set.

In one embodiment, the above method is characterized in allowing the first node to adjust the calculation of the first CQI via the first amount of adjustment, ensuring the accuracy of the first CQI.

The present application provides a method in a second node for wireless communications, comprising:
transmitting a first reference signal; and
receiving first channel information and a first CQI set;
herein, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

According to one aspect of the present application, characterized in comprising:
receiving a first wideband CQI;
herein, the first wideband CQI is for a first frequency-domain resource, the first frequency-domain resource including multiple sub-bands, the at least one CQI being multiple CQIs, the multiple CQIs being respectively used to indicate differential values between indexes of CQIs of the multiple sub-bands and the first wideband CQI.

According to one aspect of the present application, characterized in that a number of CQI values included in the second CQI table is greater than a number of CQI values included in the first CQI table.

According to one aspect of the present application, characterized in that a number of CQI values included in the second CQI table is equal to a number of CQI values included in the first CQI table.

According to one aspect of the present application, characterized in that the second CQI table includes a first CQI value; for any CQI in the first CQI set, when the any CQI is the first CQI value, the first channel information is unavailable for a sub-band that the any CQI corresponds to.

According to one aspect of the present application, characterized in that when the type of the first channel information is PMI, CQIs in the first CQI set are calculated conditioned on a precoding matrix indicated by the first channel information; when the type of the first channel information is the first type, a measurement of the first reference signal is used to generate a first channel matrix, the first channel matrix being used to generate the first CQI set, the first channel matrix being available only for the first node.

According to one aspect of the present application, characterized in that when the type of the first channel information is the first type, the first channel matrix is an output obtained after inputting the first channel information to a first reference decoder, the first reference decoder being only available for the first node.

According to one aspect of the present application, characterized in that when the type of the first channel information is the first type, the first channel matrix is used together with a first amount of adjustment to calculate CQIs included in the first CQI set.

The present application provides a first node for wireless communications, comprising:
a first receiver, receiving a first reference signal; and
a first transmitter, transmitting first channel information and a first CQI set;
herein, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

The present application provides a second node for wireless communications, comprising:
a second transmitter, transmitting a first reference signal; and
a second receiver, receiving first channel information and a first CQI set;
herein, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, the scheme in the present application is advantageous in that it improves the way of CSI reporting for AI-capable terminals, and improves the system performance while ensuring smaller changes to the existing system.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of processing of a first node according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of transmission between a first node and a second node according to one embodiment of the present application.
FIG. 6 illustrates a flowchart of transmission between a first node and a second node according to another embodiment of the present application.
FIG. 7 illustrates a schematic diagram of a first CQI set according to one embodiment of the present application.
FIG. 8 illustrates a schematic diagram of a first CQI table according to one embodiment of the present application.
FIG. 9 illustrates a schematic diagram of a second CQI table according to one embodiment of the present application.
FIG. 10 illustrates a schematic diagram of a first frequency-domain resource according to one embodiment of the present application.
FIG. 11 illustrates a flowchart of transmission of first channel information according to one embodiment of the present application.
FIG. 12 illustrates a schematic diagram of a first encoder according to one embodiment of the present application.
FIG. 13 illustrates a structure block diagram of a processing device used in a first node according to one embodiment of the present application.
FIG. 14 illustrates a structure block diagram of a processing device used in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

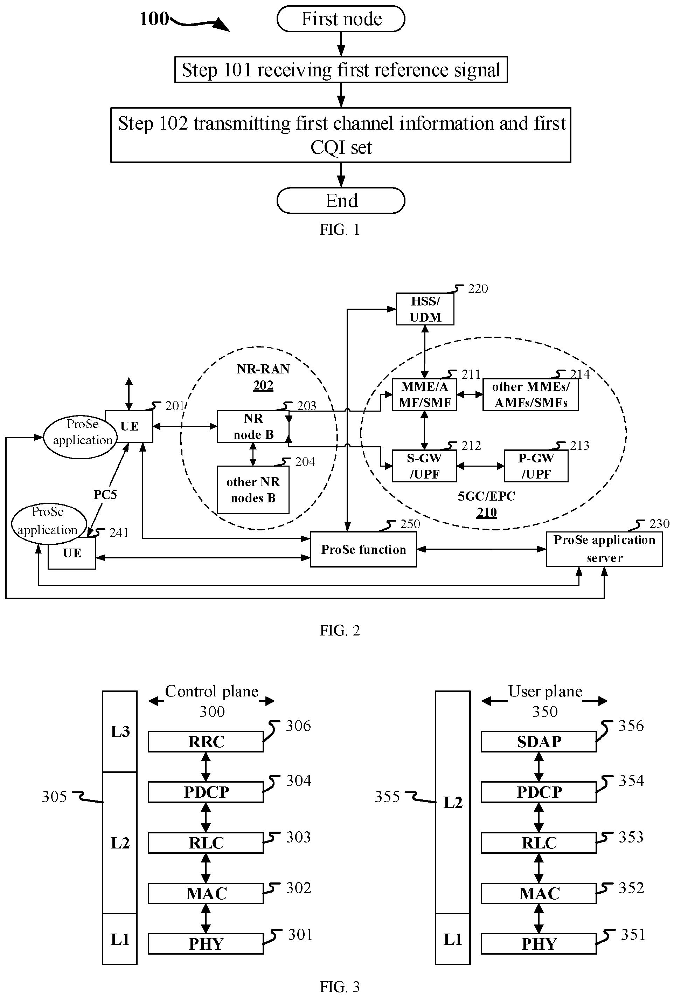

Embodiment 1 illustrates a flowchart of processing of a first node, as shown in FIG. 1. In 100 illustrated by FIG. 1, each box represents a step. In Embodiment 1, the first node of this application receives a first reference signal in step 101; and transmits first channel information and a first CQI set in step 102.

In Embodiment 1, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, the first reference signal comprises at least one Channel State Information Reference Signal (CSI-RS).

In one embodiment, the first reference signal corresponds to at least one CSI-RS resource.

In one embodiment, the first reference signal occupies at least one CSI-RS resource.

In one embodiment, the first reference signal occupies a positive integer number (more than one) of Resource Elements (REs).

In one embodiment, the first reference signal comprises at least one downlink RS resource for channel measurement and at least one downlink RS resource for interference measurement.

In one embodiment, the first reference signal comprises at least one downlink RS resource for channel measurement.

In one embodiment, the first reference signal comprises at least one downlink RS resource for interference measurement.

In one embodiment, the first reference signal comprises at least one Synchronization Signal/physical broadcast channel Block (SSB).

In one embodiment, the first reference signal occupies time-frequency resources corresponding to at least one SSB.

In one embodiment, the first CQI set comprises at least one CQI.

In one embodiment, the first CQI set comprises multiple CQIs.

In one embodiment, a CQI in the present application corresponds to a CQI Index.

In one embodiment, a CQI in the present application corresponds to a modulation method.

In one embodiment, a CQI in the present application corresponds to a value of code rate × 1024.

In one embodiment, a CQI in the present application corresponds to an efficiency.

In one embodiment, the type of the first channel information is PMI.

In one embodiment, any CQI in the first CQI set is conditioned on a precoding matrix indicated by the first channel information.

In one embodiment, when the type of the first channel information is PMI, the first channel information is used to indicate a PMI.

In one embodiment, when the type of the first channel information is PMI, any CQI in the first CQI set is conditioned on a precoding matrix indicated by the first channel information.

In one embodiment, the first channel information indicates at least one precoding matrix from a type II codebook.

In one embodiment, the first channel information indicates at least one precoding matrix from an enhanced type II codebook.

In one embodiment, the type of the first channel information is a first type.

In one embodiment, when the type of the first channel information is the first type, a precoding matrix corresponding to the first channel information is known at both the first node and the second node.

In one embodiment, when the type of the first channel information is the first type, any CQI in the first CQI set is conditioned on a non-codebook-based precoding matrix.

In one embodiment, the non-codebook-based precoding matrix is generated by a first encoder, with the input of the first encoder comprising the first channel information.

In one embodiment, when the type of the first channel information is the first type, any CQI in the first CQI set is conditioned on one codebook-based precoding matrix.

In one embodiment, the one codebook-based precoding matrix is selected based on the assumption that the type of the first channel information is PMI.

In one embodiment, the one codebook-based precoding matrix is a precoding matrix in a type II codebook.

In one embodiment, the one codebook-based precoding matrix is a precoding matrix in an enhanced type II codebook.

In one embodiment, the meaning of that the type of the first channel information is the first type comprises: the first channel information being used to determine the second CQI table different from the first CQI table.

In one embodiment, the meaning of that the type of the first channel information is the first type comprises: the first channel information being used to determine a first subband set and the CQI indicated by the first channel information not being applicable to the first subband set.

In one embodiment, the first CQI table corresponds to Table 5.2.2.1-1 in TS 38.214.

In one embodiment, the first CQI table corresponds to Mapping sub-band differential CQI value to offset level in Release 17.

In one embodiment, the second CQI table corresponds to Mapping sub-band differential CQI value to offset level in versions after Release 17.

In one embodiment, the second CQI table includes index /indexes corresponding to indication(s) for one or more sub-bands not applicable to the first CQI table.

In one embodiment, any CQI in the first CQI set is a subband CQI.

In one embodiment, the second CQI table is related to a Category of the first node.

In one embodiment, the second CQI table is related to the type of the first node.

In one embodiment, the first channel information is transmitted on a Physical Uplink Shared Channel (PUSCH).

In one embodiment, the first channel information and the first CQI set are transmitted on a same PUSCH.

In one embodiment, the first channel information is transmitted on a Physical Uplink Control Chanel (PUCCH).

In one embodiment, the first channel information and the first CQI set are transmitted on a same PUCCH.

### Embodiment 2

Embodiment 2 illustrates a schematic diagram of a network architecture, as shown in FIG. 2.

Embodiment 2 illustrates a schematic diagram of a network architecture according to one embodiment of the present application, as shown in FIG. 2. FIG. 2 illustrates a V2X communication architecture of 5G New Radio (NR), Long-Term Evolution (LTE) and Long-Term Evolution Advanced (LTE-A) systems. The 5G NR or LTE network architecture may be called a 5G System/ Evolved Packet System (5GS/EPS) or other suitable terminology.

The V2X communication architecture in Embodiment 2 may comprise a UE 201, a UE241, an NG-RAN 202, a 5G-Core Network/Evolved Packet Core (5GC/EPC) 210, a Home Subscriber Server/ Unified Data Management (HSS/UDM) 220, a ProSe function250 and ProSe application server 230. The V2X communication architecture may be interconnected with other access networks. For simple description, the entities/interfaces are not shown. As shown in FIG. 2, the V2X communication architecture provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/UserPlaneFunction (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services. The ProSe 250 refers to logical functions of network-related actions needed for Proximity-based Service (ProSe), including Direct Provisioning Function (DPF), Direct Discovery Name Management Function and EPC-level Discovery ProSe Function. The ProSe application server 230 is featured with functions like storing EPC ProSe user ID, and mapping between an application-layer user ID and an EPC ProSe user ID as well as allocating ProSe-restricted code-suffix pool.

In one embodiment, the UE 201 corresponds to the first node in the present application, and the gNB203 corresponds to the second node in the present application.

In one embodiment, the UE201 supports the generation of reports taking advantage of Artificial Intelligence (AI) or Machine Learning.

In one embodiment, the UE201 supports the generation of a trained model using the training data or the generation of some of parameters in the trained model using the training data.

In one embodiment, the UE201 supports the determination of at least part of parameters of Conventional Neural Networks (CNN) for CSI reconstruction through training.

In one embodiment, the UE 201 is a terminal supporting Massive-MIMO.

In one embodiment, the gNB203 supports Massive-MIMO-based transmission.

In one embodiment, the gNB203 supports the decompression of CSI taking advantage of AI or Deep Learning.

In one embodiment, the gNB 203 is a MacroCellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application are respectively the UE201 and the gNB203.

In one embodiment, the first node in the present application is the UE 201, and the second node in the present application is the UE241.

### Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first communication node (UE, gNB or, RSU in V2X) and a second communication node (gNB, UE, or RSU in V2X), is represented by three layers, i.e., layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first communication node and a second communication node via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second communication nodes. The PDCP sublayer 304 provides multiplexing among variable radio bearers and logical channels. The PDCP sublayer 304 provides security by encrypting packets and also support for inter-cell handover of the second communication node between first communication nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second communication node and the first communication node. The radio protocol architecture in the user plane 350 comprises the L1 layer and the L2 layer. In the user plane 350, the radio protocol architecture used for the first communication node and the second communication node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first communication node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the PDCP304 of the second communication node is used for generating scheduling of the first communication node.

In one embodiment, the PDCP354 of the second communication node is used for generating scheduling of the first communication node.

In one embodiment, the first reference signal is generated by the PHY 301 or the PHY 351.

In one embodiment, the first reference signal is generated by the MAC302 or the MAC352.

In one embodiment, the first reference signal is generated by the RRC 306.

In one embodiment, the first channel information is generated by the MAC302 or the MAC352.

In one embodiment, the first channel information is generated by the RRC 306.

In one embodiment, the first CQI set is generated by the PHY301.

In one embodiment, the first CQI set is generated by the MAC302 or the MAC352.

In one embodiment, the first CQI set is generated by the RRC 306.

In one embodiment, the first wideband CQI is generated by the PHY301.

In one embodiment, the first wideband CQI is generated by the MAC302 or the MAC352.

In one embodiment, the first wideband CQI is generated by the RRC306.

In one embodiment, the first channel matrix is generated by the PHY 301 or the PHY 351.

In one embodiment, the first amount of adjustment is generated by the PHY 301 or the PHY 351.

In one embodiment, the first node is a terminal.

In one embodiment, the first node is a relay.

In one embodiment, the second node is a terminal.

In one embodiment, the second node is a relay.

In one embodiment, the second node is a base station.

In one embodiment, the second node is a gNB.

In one embodiment, the second node is a Transmitter Receiver Point (TRP).

In one embodiment, the second node is used for managing multiple TRPs.

In one embodiment, the second node is used for managing multiple nodes of cells.

In one embodiment, the second node is used for managing multiple nodes of serving cells.

### Embodiment 4

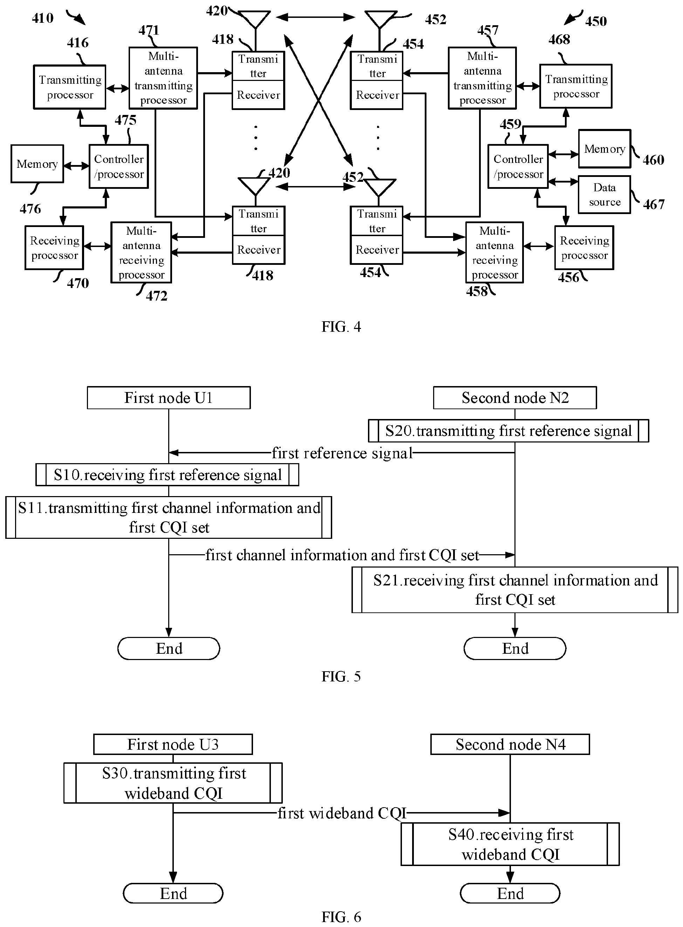

Embodiment 4 illustrates a schematic diagram of a first communication device and a second communication device according to the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 410 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least firstly receives a first reference signal; and then transmits first channel information and a first CQI set; a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, the first communication device 450 comprises a memory that stores a computer readable instruction program. The computer readable instruction program generates actions when executed by at least one processor. The actions include: firstly receiving a first reference signal; and then transmitting first channel information and a first CQI set; a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, the second communication device 410 comprises at least one processor and at least one memory. The at least one memory comprises computer program codes; the at least one memory and the computer program codes are configured to be used in collaboration with the at least one processor. The second communication device 410 at least firstly transmits a first reference signal; and then receives first channel information and a first CQI set; a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, the second communication device 410 comprises a memory that stores a computer readable instruction program. The computer readable instruction program generates actions when executed by at least one processor. The actions include: firstly transmitting a first reference signal; and then receiving first channel information and a first CQI set; a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, the first communication device 450 corresponds to the first node in the present application.

In one embodiment, the second communication device 410 corresponds to the second node in the present application.

In one embodiment, the first communication device 450 is a UE.

In one embodiment, the first communication device 450 is a terminal.

In one embodiment, the first communication device 450 is a relay.

In one embodiment, the first communication device 450 is an AI-capable terminal.

In one embodiment, the second communication device 410 is a UE.

In one embodiment, the second communication device 410 is a terminal.

In one embodiment, the second communication device 410 is a relay.

In one embodiment, the second communication device 410 is an AI-capable terminal.

In one embodiment, the second communication device 410 is a base station.

In one embodiment, the second communication device 410 is a relay.

In one embodiment, the second communication device 410 is network equipment.

In one embodiment, the second communication device 410 is a serving cell.

In one embodiment, the second communication device 410 is a TRP.

In one embodiment, at least the first four of the antenna 452, the receiver 454, the multi-antenna receiving processor 458, the receiving processor 456, and the controller/processor 459 are used for receiving the first reference signal; at least the first four of the antenna 420, the transmitter 418, the multi-antenna transmitting processor 471, the transmitting processor 416 and the controller/processor 475 are used for transmitting the first reference signal.

In one embodiment, at least the first four of the antenna 452, the transmitter 454, the multi-antenna transmitting processor 457, the transmitting processor 468 and the controller/processor 459 are used for transmitting the first channel information and the first CQI set; at least the first four of the antenna 420, the receiver 418, the multi-antenna receiving processor 472, the receiving processor 470 and the controller/processor 475 are used for receiving the first channel information and the first CQI set.

In one embodiment, at least the first four of the antenna 452, the transmitter 454, the multi-antenna transmitting processor 457, the transmitting processor 468 and the controller/processor 459 are used for transmitting the first wideband CQI; at least the first four of the antenna 420, the receiver 418, the multi-antenna receiving processor 472, the receiving processor 470 and the controller/processor 475 are used for receiving the first wideband CQI.

### Embodiment 5

Embodiment 5 illustrates a flowchart of transmission between a first node and a second node according to one embodiment of the present application, as shown in FIG. 5. In FIG. 5, a first node U1 and a second node N2 are in communication via a radio link. It should be particularly noted that the sequence illustrated herein does not set any limit to the signal transmission order or implementation order in the present application. In case of no conflict, the embodiments, sub-embodiments, and subsidiary embodiments in Embodiment 5 can be applied to any embodiment of Embodiment 6; conversely, in case of no conflict, any of the embodiments, sub-embodiments, and subsidiary embodiments in Embodiment 6 can be applied to Embodiment 5.

The **first node U1** receives a first reference signal in step S10; and transmits first channel information and a first CQI set in step S11.

The **second node N2** transmits a first reference signal in step S20, and receives first channel information and a first CQI set in step S21.

In Embodiment 5, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

Typically, a number of CQI values included in the second CQI table is greater than a number of CQI values included in the first CQI table.

In one embodiment, CQI values included in the second CQI table correspond to multiple Offset Values, respectively.

In one embodiment, CQI values included in the first CQI table correspond to multiple Offset Values, respectively.

In one embodiment, at least one CQI value of the multiple CQI values included in the second CQI table is the same as any CQI value of the multiple CQI values included in the first CQI table.

Typically, a number of CQI values included in the second CQI table is equal to a number of CQI values included in the first CQI table.

In one embodiment, at least one CQI value of the multiple CQI values included in the second CQI table is different from any CQI value of the multiple CQI values included in the first CQI table.

Typically, the second CQI table includes a first CQI value; for any CQI in the first CQI set, when the any CQI is the first CQI value, the first channel information is unavailable for a sub-band that the any CQI corresponds to.

In one embodiment, the above phrase that the first channel information is unavailable for a sub-band that the any CQI corresponds to means that the any CQI is not used to represent a sub-band CQI of the sub-band that the any CQI corresponds to.

In one embodiment, the above phrase that the first channel information is unavailable for a sub-band that the any CQI corresponds to means that when the first channel information is used to indicate the first CQI value in the second CQI table, the first CQI set is not used to represent a sub-band CQI of the sub-band that the any CQI corresponds to.

Typically, when the type of the first channel information is PMI, CQIs in the first CQI set are calculated conditioned on a precoding matrix indicated by the first channel information; when the type of the first channel information is the first type, a measurement of the first reference signal is used to generate a first channel matrix, the first channel matrix being used to generate the first CQI set, the first channel matrix being available only for the first node.

In one embodiment, the first channel matrix comprises at least one vector, each element of the at least one vector comprising a phase.

In one embodiment, the first channel matrix comprises at least one vector, each element in the at least one vector comprising a phase, all elements of each vector among the at least one vector having the same magnitude.

In one embodiment, the first channel matrix comprises at least one eigenvector.

In one embodiment, the first channel matrix comprises at least one eigenvector and an eigenvalue corresponding to each one of the at least one eigenvector.

In one embodiment, each element of the first channel matrix is a channel impulse response from a transmitting antenna port to a receiving antenna.

In one embodiment, each element of the first channel matrix is a Channel Impulse Response between a transmitting antenna port and a receiving antenna on a Resource Block (RB) or Sub-band.

In one embodiment, when the type of the first channel information is the first type, the first channel information is generated by an artificial intelligence-based method.

Typically, when the type of the first channel information is the first type, the first channel matrix is an output obtained after inputting the first channel information to a first reference decoder, the first reference decoder being only available for the first node.

In one embodiment, the first CQI set is computed on the condition that the first channel matrix is used for precoding.

In one embodiment, the first reference decoder is artificial intelligence (AI) based.

Typically, when the type of the first channel information is the first type, the first channel matrix is used together with a first amount of adjustment to calculate CQIs included in the first CQI set.

Typically, the application of the first amount of adjustment causes the CQIs included in the first CQI set to be reduced or unchanged.

In one embodiment, the first amount of adjustment is determined by the first node itself.

In one embodiment, the first amount of adjustment is calculated by the first node.

In one embodiment, the first amount of adjustment is configurable.

In one embodiment, the first amount of adjustment is predetermined.

In one embodiment, a first amount of adjustment is a real number not greater than 1 and not less than 0.

In one embodiment, a first amount of adjustment is a real number greater than 0 and less than 1.

In one embodiment, the first amount of adjustment is an integer.

In one embodiment, the first amount of adjustment is a non-negative integer.

In one embodiment, the first amount of adjustment is an index.

In one embodiment, the first amount of adjustment is used to determine a first matrix.

In one embodiment, the first amount of adjustment is used to determine a first matrix, and the first channel matrix and the first matrix are used together to determine the first reference channel matrix.

In one embodiment, the first reference channel matrix is obtained by multiplying the first amount of adjustment by the first channel matrix parameter.

In one subembodiment, a first amount of adjustment is a real number greater than 0 and less than 1.

In one embodiment, when the type of the first channel information is the first type, a channel quality calculated subject to that the first channel matrix is used for precoding is used together with the first amount of adjustment to determine CQIs in the first CQI set.

In one embodiment, the channel quality calculated on the condition that the first channel matrix is used for precoding is a CQI index, and the first CQI is a value obtained by subtracting the first amount of adjustment from the CQI index.

In one subembodiment, the first amount of adjustment is a positive integer or 0.

In one subembodiment, the first amount of adjustment is less than 16.

In one embodiment, the channel quality calculated on the condition that the first channel matrix is used for precoding is an equivalent channel quality, and a CQI in the first CQI set is a CQI index obtained by subtracting the first amount of adjustment from the equivalent channel quality before looking up the table.

In one subembodiment, the first amount of adjustment is measured in dB.

In one subembodiment, the first amount of adjustment does not exceed 12 dB.

### Embodiment 6

Embodiment 6 illustrates a flowchart of transmission between a first node and a second node according to another embodiment of the present application, as shown in FIG. 6. In FIG. 6, a first node U3 and a second node N4 are in communication via a radio link. It should be particularly noted that the sequence illustrated herein does not set any limit to the signal transmission order or implementation order in the present application. In case of no conflict, the embodiments, sub-embodiments, and subsidiary embodiments in Embodiment 6 can be applied to any embodiment of Embodiment 5; conversely, in case of no conflict, any of the embodiments, sub-embodiments, and subsidiary embodiments in Embodiment 5 can be applied to Embodiment 6.

The **first node U3** transmits a first wideband CQI in step S30.

The **second node N4** receives a first wideband CQI in step S40.

In Embodiment 6, the first wideband CQI is for a first frequency-domain resource, the first frequency-domain resource including multiple sub-bands, the at least one CQI being multiple CQIs, the multiple CQIs being respectively used to indicate differential values between indexes of CQIs of the multiple sub-bands and the first wideband CQI.

In one embodiment, the first frequency-domain resource corresponds to a Carrier.

In one embodiment, the first frequency-domain resource corresponds to a Component Carrier (CC).

In one embodiment, the first frequency-domain resource corresponds to a Serving Cell.

In one embodiment, the first frequency-domain resource corresponds to a Bandwidth Part (BWP).

In one embodiment, the multiple CQIs are respectively used to determine CQIs of the multiple subbands.

In one embodiment, the multiple subbands correspond to the first subband set in this application.

In one embodiment, the multiple subbands correspond to subbands in the first frequency-domain resource and outside of the first subband set in this application.

In one embodiment, a subband in this application occupies a frequency-domain bandwidth corresponding to a positive integer number (greater than one) of Physical Resource Blocks (PRBs).

In one embodiment, a subband in this application occupies K1 PRBs, K1 is a positive integer greater than 1, and the K1 is one of 4, 8, 16 or 32.

In one embodiment, the value of K1 is related to the number of PRBs corresponding to the first frequency-domain resource.

In one embodiment, when the type of the first channel information is the PMI, the first channel information is used to indicate a target offset value in the first CQI table, each one of multiple CQI indexes corresponding to the multiple CQIs being equal to a sum of the target offset value and a CQI index corresponding to the first wideband CQI.

In one embodiment, when the type of the first channel information is the first type, the first channel information is used to indicate a target offset value in the second CQI table, each one of multiple CQI indexes corresponding to the multiple CQIs being equal to a sum of the target offset value and a CQI index corresponding to the first wideband CQI.

In one embodiment, when the type of the first channel information is the first type, the first channel information is used to indicate that a target offset value indicated in the second CQI table is not applicable to a sub-band within the first frequency-domain bandwidth and outside of the multiple sub-bands.

In one embodiment, the step S30 is located after the step S10 and before the step S11 in Embodiment 5.

In one embodiment, the step S40 is located after the step S20 and before the step S21 in Embodiment 5.

In one embodiment, the step S30 is located after the step S11 in Embodiment 5.

In one embodiment, the step S40 is located after the step S21 in Embodiment 5.

In one embodiment, the step S30 is taken concurrently with the step S11 in Embodiment 5.

In one embodiment, the step S40 is taken concurrently with the step S21 in Embodiment 5.

### Embodiment 7

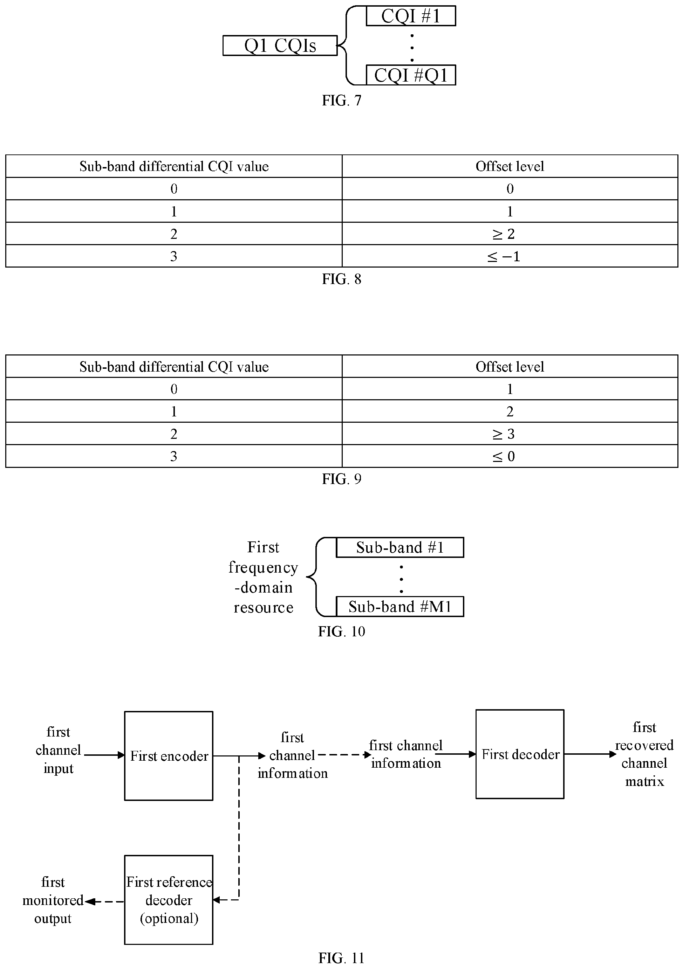

Embodiment 7 illustrates a schematic diagram of a first CQI set, as shown in FIG. 7. In FIG. 7, the first CQI set comprises Q1 CQIs, Q1 being a positive integer greater than 1; CQI#1 to CQI#Q1 in the figure correspond to the Q1 CQIs, respectively.

In one embodiment, the Q1 CQIs correspond to Q1 CQI Indexes, respectively.

In one embodiment, the Q1 CQIs correspond to Q1 modulation methods, respectively.

In one embodiment, the Q1 CQIs correspond to Q1 code rates, respectively.

In one embodiment, the Q1 CQIs correspond to Q1 coding efficiencies, respectively.

In one embodiment, the Q1 CQIs correspond to Q1 subbands included in the first frequency-domain resource of the present application, respectively.

In one embodiment, the Q1 CQIs all correspond to the same CQI Index.

In one embodiment, the Q1 CQIs are all ranges of Q1 CQI Indexes obtained based on the first wideband CQI.

In one subembodiment, the first channel information is used to indicate a Sub-band Offset Level between Q1 CQI Indexes corresponding to the Q1 CQIs and the first wideband CQI.

### Embodiment 8

Embodiment 8 illustrates a schematic diagram of a first CQI table, as shown in FIG. 8. In FIG. 8, the first CQI table comprises 4 Sub-band Differential CQI values, the 4 Sub-band Differential CQI values corresponding to the 4 offset levels respectively. When the type of the first channel information is PMI, the first channel information is used to indicate a given Sub-band Differential CQI value from the 4 Sub-band Differential CQI values, and the given Sub-band Differential CQI value is used to determine, based on the first wideband CQI, the Q1 CQIs that respectively correspond to the Q1 sub-bands.

In one embodiment, the first CQI table is Table 5.2.2.1-1 in TS 38.214.

### Embodiment 9

Embodiment 9 illustrates a schematic diagram of a second CQI table, as shown in FIG. 9. In FIG. 9, the second CQI table comprises 4 Sub-band Differential CQI values, the 4 Sub-band Differential CQI values corresponding to the 4 offset levels respectively. When the type of the first channel information is the first type, the first channel information is used to indicate a given Sub-band Differential CQI value from the 4 Sub-band Differential CQI values, and the given Sub-band Differential CQI value is used to determine, based on the first wideband CQI, the Q1 CQIs that respectively correspond to the Q1 sub-bands.

In one embodiment, the second CQI table is different from Table 5.2.2.1-1 in TS 38.214.

In one embodiment, the second CQI table is different from the first CQI table.

### Embodiment 10

Embodiment 10 illustrates a schematic diagram of a first frequency-domain resource according to one embodiment of the present application, as shown in FIG. 10. In FIG. 10, the first frequency-domain resource comprises M1 subbands, which correspond to subband #1 to subband #M1 in the figure, respectively, the M1 being a positive integer greater than 1.

In one embodiment, the first channel information is used to indicate the Q1 subbands in the present application from the M1 subbands.

In one embodiment, the first channel information is used to indicate, from the M1 subbands, subbands that are not applicable to the first CQI set.

In one embodiment, the M1 is a positive integer not less than the Q1 in this application.

In one embodiment, the first subband set in this application corresponds to subband(s) in the M1 subbands and outside the Q1 subbands.

### Embodiment 11

Embodiment 11 illustrates a flowchart of transmission of first channel information according to one embodiment of the present application, as shown in FIG. 11. In FIG. 11, a first reference decoder is optional.

In Embodiment 11, a first encoder and a first decoder respectively belong to a first node and a second node; herein, the first encoder belongs to a first receiver, while the first decoder belongs to a second receiver.

The first receiver generates the first channel information utilizing a first encoder; herein, an input to the first encoder comprises the first channel input, the first encoder being obtained through training; the first channel input being obtained through a measurement of a first reference signal;
the first node sends the first channel information as feedback to the second node via an air interface;
the second receiver generates a first recovered channel matrix utilizing a first decoder; herein, an input to the first decoder comprises the first channel information, the first decoder being obtained through training.

Theoretically, the first encoder and the first decoder shall be seen as reciprocal operations to ensure that the first channel input is identical to the first recovered channel matrix; however, due to factors such as the complexity of implementation or radio overhead or delay, the first encoder and the first decoder in Embodiment 8 cannot guarantee a complete offset, so it cannot be ensured that the first channel input is totally the same as the first recovered channel matrix, leading to a result that the conventional way of computing CQI is no longer applicable, namely, it is impossible to find a precoding matrix for CQI computing, for which both sides have a consistent understanding.

In one embodiment, the first channel input is a channel parameter matrix, or, a matrix consisting of at least one Eigen vector.

In one embodiment, the first channel input is a first channel matrix.

In the above embodiments, the estimation of a first CQI is probably too optimistic, for which the corresponding compensation may be done through a first amount of adjustment, or be adjusted by the second node itself.

In one subembodiment, compared with not using the first amount of adjustment, the application of the first amount of adjustment makes the first CQI lower or unchanged.

In one embodiment, the first channel matrix is a pre-coding matrix used for computing a CQI based on the assumption that the type of the first channel information is PMI.

In the above embodiment, the specific implementation is to implement by the hardcore manufacture vendor itself, for instance, to select a precoding vector or precoding matrix sharing a maximum Generalized Cosine Similarity with the first channel input in a candidate codebook to serve as a first channel matrix, or, to select a precoding vector or precoding matrix sharing a minimum NMSE with the first channel input in a candidate codebook to serve as a first channel matrix; a typical candidate codebook is related to a number of layers of the first channel matrix, for the candidate codebook used by an NR system, refer to TS38.214, Section 5.2.2.2.

In the above embodiments, the estimation of a first CQI is probably too conservative, for which the corresponding compensation may be done through a first amount of adjustment, or be adjusted by the second node itself.

In one subembodiment, compared with not using the first amount of adjustment, the application of the first amount of adjustment makes the first CQI value higher or unchanged.

In one embodiment, the first receiver also comprises a first reference decoder, where an input to the first reference decoder comprises the first channel information, and an output by the first reference decoder comprises a first monitored output.

In one embodiment, the first channel matrix is the first monitored output, where the first reference decoder and the first decoder cannot be assumed to be identical.

In the above embodiment, the first reference decoder and the first decoder are probably independently generated or independently maintained, therefore, even if they both aim to perform an inverse operation of the first encoder, they are more likely to be similar rather than the same.

In one subembodiment, the first reference decoder is similar to the first decoder, so a CQI error caused by a difference between them is adjusted by the second node itself.

In one subembodiment, a CQI error caused by a difference between the first reference decoder and the first decoder is adjusted by a first amount of adjustment.

In one embodiment, a training for the first encoder is used to determine the first amount of adjustment.

In one subembodiment, the training for the first encoder is used for obtaining the first encoder and the first reference decoder.

In one embodiment, the training for the first encoder is performed in the first node.

In one embodiment, the training for the first encoder is performed by the second node.

In one embodiment, the first recovered channel matrix is only known to the second node.

In one embodiment, the first recovered channel matrix and the first channel matrix cannot be assumed to be identical.

### Embodiment 12

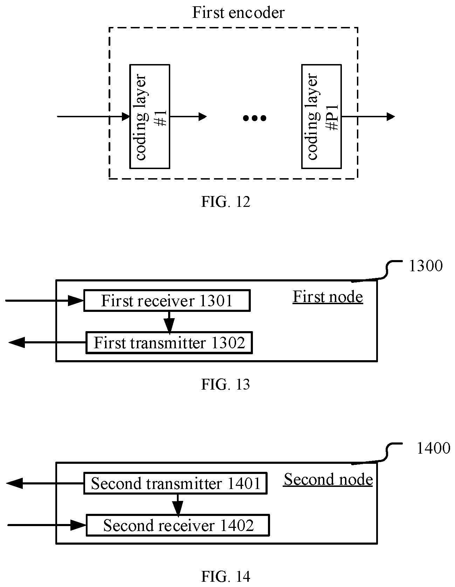

Embodiment 12 illustrates a schematic diagram of a first encoder according to one embodiment of the present application, as shown in FIG. 12. In FIG. 12, the first encoder comprises P1 coding layers, namely, coding layers #1, #2..., and #P1.

In one embodiment, P1 is 2, namely, the P1 coding layers include a coding layer #1 and a coding layer #2, the coding layer #1 and the coding layer #2 respectively being a Convolution layer and a Fully Connected layer; at the Convolution layer, at least one convolutional kernel is used for convoluting the first channel input for generating corresponding feature map(s), and at least one feature map output by the convolution layer is/are reshaped as a vector to be input to the Fully Connected layer; the Fully Connected layer converts the above vector into the first channel information. A more detailed description can be found in the technical literature related to CNNs, for example, Chao-Kai Wen, Deep Learning for Massive MIMO CSI Feedback, IEEE WIRELESS COMMUNICATIONS LETTERS, VOL. 7, NO. 5, OCTOBER 2018, etc.

In one embodiment, P1 is 3, namely, the P1 coding layers are respectively a Fully Connected layer, a Convolution layer and a Pooling layer.

### Embodiment 13

Embodiment 13 illustrates a structure block diagram of a first node, as shown in FIG. 13. In FIG. 13, a first node 1300 comprises a first receiver 1301 and a first transmitter 1302.

The first receiver 1301 receives a first reference signal; and
the first transmitter 1302 transmits first channel information and a first CQI set.

In Embodiment 13, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, comprising:
the first transmitter 1302, transmitting a first wideband CQI;
herein, the first wideband CQI is for a first frequency-domain resource, the first frequency-domain resource including multiple sub-bands, the at least one CQI being multiple CQIs, the multiple CQIs being respectively used to indicate differential values between indexes of CQIs of the multiple sub-bands and the first wideband CQI.

In one embodiment, a number of CQI values included in the second CQI table is greater than a number of CQI values included in the first CQI table.

In one embodiment, a number of CQI values included in the second CQI table is equal to a number of CQI values included in the first CQI table.

In one embodiment, the second CQI table includes a first CQI value; for any CQI in the first CQI set, when the any CQI is the first CQI value, the first channel information is unavailable for a sub-band that the any CQI corresponds to.

In one embodiment, when the type of the first channel information is PMI, CQIs in the first CQI set are calculated conditioned on a precoding matrix indicated by the first channel information; when the type of the first channel information is the first type, a measurement of the first reference signal is used to generate a first channel matrix, the first channel matrix being used to generate the first CQI set, the first channel matrix being available only for the first node.

In one embodiment, when the type of the first channel information is the first type, the first channel matrix is an output obtained after inputting the first channel information to a first reference decoder, the first reference decoder being only available for the first node.

In one embodiment, when the type of the first channel information is the first type, the first channel matrix is used together with a first amount of adjustment to calculate CQIs included in the first CQI set.

In one embodiment, the first receiver 1301 comprises at least the first four of the antenna 452, the receiver 454, the multi-antenna receiving processor 458, the receiving processor 456 and the controller/processor 459 in Embodiment 4.

In one embodiment, the first transmitter 1302 comprises at least the first four of the antenna 452, the transmitter 454, the multi-antenna transmitting processor 457, the transmitting processor 468 and the controller/processor 459 in Embodiment 4.

### Embodiment 14

Embodiment 14 illustrates a structure block diagram of a second node, as shown in FIG. 14. In FIG. 14, a second node 1400 comprises a second transmitter 1401 and a second receiver 1402.

The second transmitter 1401 transmits a first reference signal; and
the second receiver 1402 receives first channel information and a first CQI set.

In Embodiment 14, a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

In one embodiment, comprising:
the second receiver 1402, receiving a first wideband CQI;
herein, the first wideband CQI is for a first frequency-domain resource, the first frequency-domain resource including multiple sub-bands, the at least one CQI being multiple CQIs, the multiple CQIs being respectively used to indicate differential values between indexes of CQIs of the multiple sub-bands and the first wideband CQI.

In one embodiment, a number of CQI values included in the second CQI table is greater than a number of CQI values included in the first CQI table.

In one embodiment, a number of CQI values included in the second CQI table is equal to a number of CQI values included in the first CQI table.

In one embodiment, the second CQI table includes a first CQI value; for any CQI in the first CQI set, when the any CQI is the first CQI value, the first channel information is unavailable for a sub-band that the any CQI corresponds to.

In one embodiment, when the type of the first channel information is PMI, CQIs in the first CQI set are calculated conditioned on a precoding matrix indicated by the first channel information; when the type of the first channel information is the first type, a measurement of the first reference signal is used to generate a first channel matrix, the first channel matrix being used to generate the first CQI set, the first channel matrix being available only for the first node.

In one embodiment, when the type of the first channel information is the first type, the first channel matrix is an output obtained after inputting the first channel information to a first reference decoder, the first reference decoder being only available for the first node.

In one embodiment, when the type of the first channel information is the first type, the first channel matrix is used together with a first amount of adjustment to calculate CQIs included in the first CQI set.

In one embodiment, the second transmitter 1401 comprises at least the first four of the antenna 420, the transmitter 418, the multi-antenna transmitting processor 471, the transmitting processor 414 and the controller/processor 475 in Embodiment 4.

In one embodiment, the second receiver 1402 comprises at least the first four of the antenna 420, the receiver 418, the multi-antenna receiving processor 472, the receiving processor 470 and the controller/processor 475 in Embodiment 4.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node in the present application includes but is not limited to mobile phones, tablet computers, notebooks, network cards, low-consumption equipment, enhanced MTC (eMTC) terminals, NB-IOT terminals, vehicle-mounted communication equipment, vehicles, automobiles, RSU, aircrafts, airplanes, unmanned aerial vehicles, telecontrolled aircrafts, etc. The second node in the present application includes but is not limited to macro-cellular base stations, micro-cellular base stations, home base stations, relay base station, eNB, gNB, Transmitter Receiver Point (TRP), GNSS, relay satellite, satellite base station, airborne base station, RSU, unmanned ariel vehicle, test equipment like transceiving device simulating partial functions of base station or signaling tester, and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving a first reference signal; and
a first transmitter, transmitting first channel information and a first CQI set;
wherein a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

2. The first node according to claim 1, **characterized in** comprising:
the first transmitter, transmitting a first wideband CQI;
wherein the first wideband CQI is for a first frequency-domain resource, the first frequency-domain resource including multiple sub-bands, the at least one CQI being multiple CQIs, the multiple CQIs being respectively used to indicate differential values between indexes of CQIs of the multiple sub-bands and the first wideband CQI.

3. The first node according to claim 1 or 2, **characterized in that** a number of CQI values included in the second CQI table is greater than a number of CQI values included in the first CQI table.

4. The first node according to claim 1 or 2, **characterized in that** a number of CQI values included in the second CQI table is equal to a number of CQI values included in the first CQI table.

5. The first node according to any of claims 1-4, **characterized in that** the second CQI table includes a first CQI value; for any CQI in the first CQI set, when the any CQI is the first CQI value, the first channel information is unavailable for a sub-band that the any CQI corresponds to.

6. The first node according to any of claims 1-5, **characterized in that** when the type of the first channel information is PMI, CQIs in the first CQI set are calculated conditioned on a precoding matrix indicated by the first channel information; when the type of the first channel information is the first type, a measurement of the first reference signal is used to generate a first channel matrix, the first channel matrix being used to generate the first CQI set, the first channel matrix being available only for the first node.

7. The first node according to claim 6, **characterized in that** when the type of the first channel information is the first type, the first channel matrix is an output obtained after inputting the first channel information to a first reference decoder, the first reference decoder being available only for the first node.

8. The first node according to claim 6 or 7, **characterized in that** when the type of the first channel information is the first type, the first channel matrix is used together with a first amount of adjustment to calculate CQIs included in the first CQI set.

9. A second node for wireless communications, comprising:
a second transmitter, transmitting a first reference signal; and
a second receiver, receiving first channel information and a first CQI set;
wherein a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

10. A method in a first node for wireless communications, comprising:
receiving a first reference signal; and
transmitting first channel information and a first CQI set;
wherein a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.

11. A method in a second node for wireless communications, comprising:
transmitting a first reference signal; and
receiving first channel information and a first CQI set;
wherein a measurement of the first reference signal is used to generate the first channel information and the first CQI set; the first CQI set includes at least one CQI, each of the at least one CQI indicating one CQI index in a target CQI table, the target CQI table being related to a type of the first channel information, the type of the first channel information being one of PMI or a first type, the first type being non-codebook based; when the type of the first channel information is PMI, the target CQI table is a first CQI table; when the type of the first channel information is the first type, the target CQI table is a second CQI table.
